# EUROPEAN PATENT APPLICATION

(11) **EP 4 632 905 A1**
(43) Date of publication of application: **15.10.2025**
(21) Application number: 24879936.3
(22) Date of filing: 23.08.2024
(51) Int. Cl.: H01M 50/242, H01M 50/507, H01M 50/105, H01M 50/211, H01M 50/249

(54) **BATTERY ASSEMBLY**

(30) Priority: 20.10.2023 KR 20230141264
(71) Applicant: LG Energy Solution, Ltd., Seoul 07335 (KR)
(72) Inventor: MUN, Ji-Seon, Daejeon 34122 (KR); CHUNG, Won-Sik, Daejeon 34122 (KR)
(74) Representative: Plasseraud IP
(86) International application number: PCT/KR2024/012586
(87) International publication number: WO 2025/084596

(57) **Abstract**

Disclosed is a battery assembly. The battery assembly includes a case providing an inner space; a plurality of battery cells accommodated in the case and stacked in a left and right direction; a rail provided in the case and extending in the left and right direction; and a bus bar configured to slide along the rail and electrically connected to the plurality of battery cells.

## Description

### TECHNICAL FIELD

The present disclosure relates to a battery assembly.

This application is based on and claims priority from Korean Patent Application No. 10-2023-0141264, filed on October 20, 2023, with the Korean Intellectual Property Office, the disclosure of which is incorporated herein in its entirety by reference.

### BACKGROUND ART

As the demand for portable electronic products such as laptops, video cameras, and portable phones is rapidly increasing, and robots, electric vehicles, or the like are commercialized in earnest, research on high-performance secondary batteries capable of repeated charging and discharging is actively underway.

Currently, commercially available secondary batteries include nickel-cadmium batteries, nickel-hydrogen batteries, nickel-zinc batteries, lithium secondary batteries and the like, and among them, lithium secondary batteries have little or no memory effect, and thus they are gaining more attention than nickel-based secondary batteries for their advantages that recharging can be done whenever it is convenient, the self-discharge rate is very low and the energy density is high.

Lithium secondary batteries primarily comprise lithium-based oxides and carbon materials for a positive electrode active material and a negative electrode active material, respectively. A lithium secondary battery includes an electrode assembly including a positive electrode plate and a negative electrode plate coated with the positive electrode active material and the negative electrode active material, respectively, with a separator interposed between the positive electrode plate and the negative electrode plate, and a sealed packaging or battery case accommodating the electrode assembly together with an electrolyte solution.

In general, lithium secondary batteries may be classified into can-type secondary batteries in which the electrode assembly is included in a metal can and pouch-type secondary batteries in which the electrode assembly is included in a pouch of an aluminum laminate sheet, according to the shape of the battery case.

Recently, secondary batteries have been widely used in medium and large devices such as electric vehicles and energy storage systems (ESSs) for driving and storing energy, as well as in small devices such as portable electronic devices. A plurality of secondary batteries may be electrically connected and stored inside a module case, thereby forming a battery module. In addition, multiple battery modules may be connected to each other to form a battery pack.

However, if a plurality of secondary batteries (battery cells) or a plurality of battery modules are crowded in a small space, they may be vulnerable to thermal events. In particular, if an event such as thermal runaway occurs in one battery cell, high temperature gas, flame, or heat may be generated. If the gases, flames, heat, etc. is transferred to other battery cells included in the same battery module, an explosive chain reaction situation such as thermal propagation may occur. Also, this chain reaction not only causes accidents such as fire or explosion in the corresponding battery module, but may also cause fire or explosion in other battery modules.

Moreover, in the case of medium to large-sized battery packs such as electric vehicles, a large number of battery cells and battery modules are included to increase output and/or capacity, so the risk of thermal chain reaction may increase further. Furthermore, in the case of a battery pack mounted on an electric vehicle, etc., users such as drivers may be present nearby.

In particular, due to the swelling phenomenon in which the battery cell swells, the battery cell is easily physically damaged, and the risk of a thermal event occurring due to the damage to the battery cell may increase. Therefore, even if the swelling phenomenon occurs in the battery cell, it is necessary to suppress damage to the battery cell and reduce the risk of a thermal event occurring.

### DISCLOSURE

### Technical Problem

The present disclosure is designed to solve these and other problems.

The present disclosure is directed to providing a battery assembly with improved electrical safety.

The present disclosure is also directed to providing a battery assembly that may prevent damage to battery cells even when swelling occurs.

### Technical Solution

In one aspect of the present disclosure, there is provided a battery assembly comprising: a case providing an inner space; a plurality of battery cells accommodated in the case and stacked in a left and right direction; a rail provided in the case and extending in the left and right direction; and a bus bar configured to slide along the rail and electrically connected to the plurality of battery cells.

In addition, at least a portion of the bus bar may be inserted into the rail.

In addition, the rail may be provided as a pair, and the pair of rails may be arranged in an upper and lower direction.

In addition, the rail may be configured to be electrically insulating.

The battery assembly may further comprise a stopper installed on the rail to limit a moving range of the bus bar.

In addition, the bus bar may be provided in plurality, and the stopper may be disposed between the plurality of bus bars.

In addition, the stopper may be fixed to the rail.

In addition, the battery assembly may further comprise a fixing member configured to fix the stopper to the rail.

In addition, the stopper may be configured to be electrically insulating.

In addition, the rail may be provided as a pair, the pair of rails may be arranged in an upper and lower direction, and the stopper may have both ends extending in the upper and lower direction and installed on the pair of rails.

In addition, the battery assembly may further comprise a frame provided in the case and on which the rail is installed.

In addition, each of the plurality of battery cells may include an accommodation portion accommodating an electrode assembly; a sealing portion extending forward from the accommodation portion; and an electrode lead protruding forward from the sealing portion, and the battery assembly may further include a terrace support that extends rearward from the frame and supports the sealing portion.

In addition, the battery assembly may further comprise a guide extending rearward from the frame and positioned above the plurality of battery cells.

A battery pack according to one aspect of the present disclosure comprises the battery assembly of the present disclosure.

A vehicle according to another aspect of the present disclosure may include the battery assembly of the present disclosure.

### Advantageous Effects

According to at least one of the embodiments of the present disclosure, the electrical safety of the battery assembly may be improved.

According to at least one of the embodiments of the present disclosure, damage to the battery cell may be prevented.

According to at least one of the embodiments of the present disclosure, the service life of the battery assembly may be improved.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a drawing showing a battery assembly according to an embodiment of the present disclosure.
FIG. 2 is a drawing showing the battery assembly of FIG. 1, in which some components are exploded.
FIG. 3 is a drawing showing a rail of the battery assembly according to an embodiment of the present disclosure.
FIG. 4 is a cross-sectional view, taken along the cutting line A-A' of FIG. 3.
FIG. 5 is a drawing showing a bus bar of the battery assembly according to an embodiment of the present disclosure.
FIG. 6 is a drawing showing a stopper of the battery assembly according to an embodiment of the present disclosure.
FIG. 7 is a drawing showing a vertical portion of the battery assembly according to an embodiment of the present disclosure.
FIG. 8 is a drawing showing a rail assembly of the battery assembly according to an embodiment of the present disclosure.
FIG. 9 is a drawing showing a cross-sectional configuration along the cutting line B-B' of FIG. 8.
FIG. 10 is a cross-sectional view, taken along the cutting line C-C' of FIG. 8.
FIG. 11 is a cross-sectional view, taken along the cutting line D-D' of FIG. 8.
FIG. 12 is a drawing showing a rail assembly of a battery assembly according to another embodiment of the present disclosure.
FIG. 13 is a drawing showing a rail assembly and a frame of the battery assembly according to an embodiment of the present disclosure.
FIG. 14 is a drawing showing some components of the battery assembly according to an embodiment of the present disclosure.
FIG. 15 is a drawing showing some components of the battery assembly of FIG. 14, viewed in a different direction.
FIG. 16 is a drawing showing some components of the battery assembly according to an embodiment of the present disclosure.
FIG. 17 is a drawing showing some components of a battery assembly according to another embodiment of the present disclosure.
FIG. 18 is a cross-sectional view, taken along the cutting line F-F' of FIG. 17.
FIG. 19 is a drawing showing some components of a battery assembly still according to another embodiment of the present disclosure.
FIG. 20 is a cross-sectional view, taken along the cutting line G-G' of FIG. 19.
FIG. 21 is a cross-sectional view, taken along the cutting line E-E' of FIG. 16.
FIG. 22 is an enlarged view showing a part H of FIG. 21.
FIG. 23 is an enlarged view showing the part H of FIG. 21 when swelling occurs.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

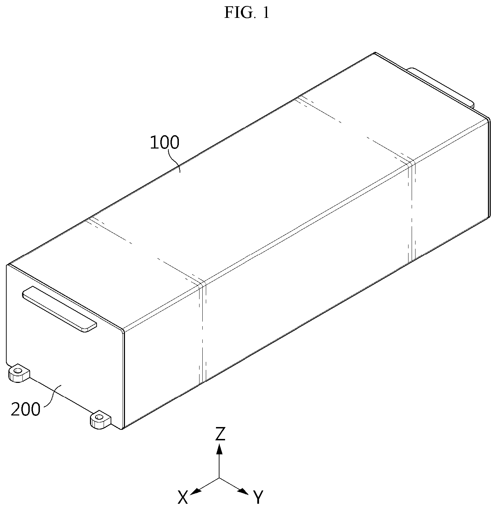

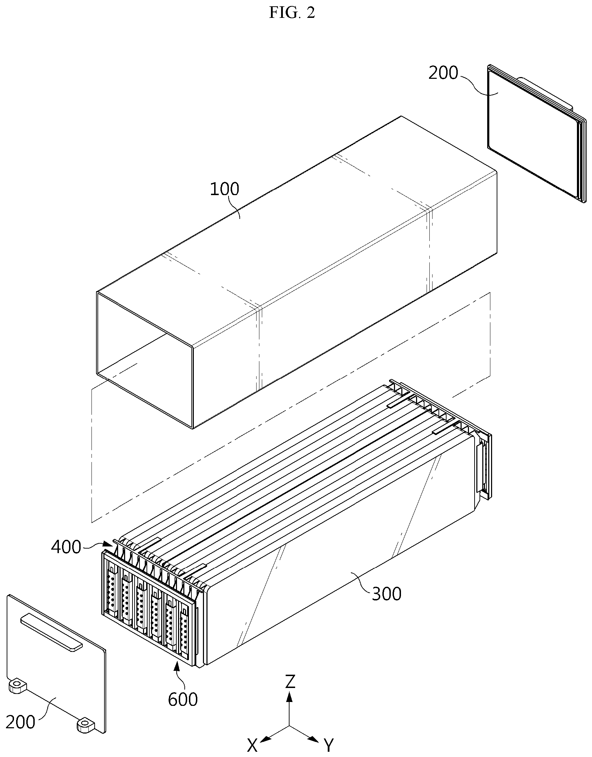

FIG. 1 is a drawing showing a battery assembly according to an embodiment of the present disclosure. FIG. 2 is a drawing showing the battery assembly of FIG. 1, in which some components are exploded. Referring to FIGS. 1 and 2, the battery assembly according to an embodiment of the present disclosure may include a case 100, a plurality of battery cells 300, a rail 610, and a bus bar 640.

The case 100 may provide a space therein. The case 100 may have a shape in which the front side and the rear side are open. Alternatively, the case 100 may have a shape that is open in the X-axis direction. The case 100 may have a rectangular parallelepiped shape.

The battery cell 300 may mean a secondary battery. In particular, the battery cell 300 may be a secondary battery having a pouch shape. The battery cell 300 may be provided in plurality. The plurality of battery cells 300 may be accommodated in the inner space of the case 100. Also, the plurality of battery cells 300 may be stacked along the left and right direction or the Y-axis direction.

The rail 610 may be provided in the case 100. The rail 610 may be installed, coupled, fastened or fixed to the case 100. The rail 610 may extend along the left and right direction or the Y-axis direction. Alternatively, the rail 610 may extend along the stacking direction of the plurality of battery cells 300.

The bus bar 640 may be configured to slide along the rail 610. The bus bar 640 may be configured to move in the left and right direction or the Y-axis direction along the rail 610. The bus bar 640 may be electrically connected to the plurality of battery cells 300. Also, the bus bar 640 may be physically connected to the plurality of battery cells 300. The bus bar 640 may be provided in plurality. The bus bar 640 may have an opening.

According to this configuration of the present disclosure, damage to the battery cell 300 may be prevented. During the operation of the battery assembly, a swelling phenomenon may occur in the battery cell 300. At this time, as the battery cell 300 swells, the sealing portion 320 or the electrode lead 330 of the battery cell 300 may move in the left and right direction. At this time, as the bus bar 640 slides along the rail 610, the tension applied to the sealing portion 320 or the electrode lead 330 may be reduced. As a result, damage to the battery cell 300 may be prevented or minimized. By preventing or minimizing damage to the battery cell 300, the electrical safety of the battery assembly may be improved.

Referring to FIGS. 1 and 2, the battery assembly may include a cover 200. The cover 200 may be configured as a pair. The pair of covers 200 may be coupled to the opening of the case 100. The cover 200 may be coupled to the front side and the rear side of the case 100, respectively.

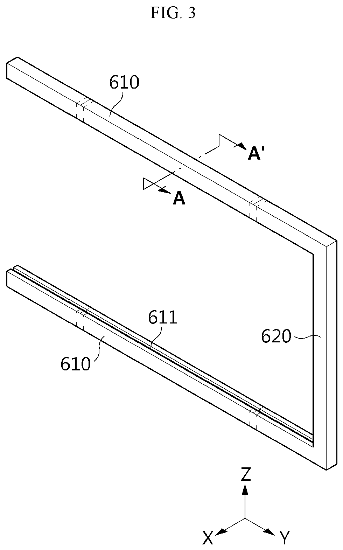

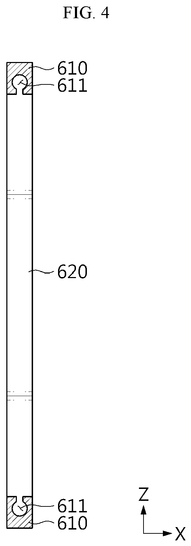

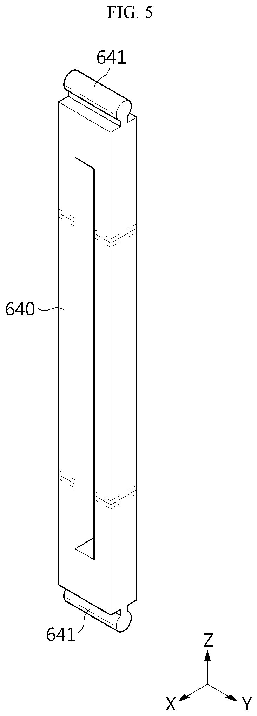

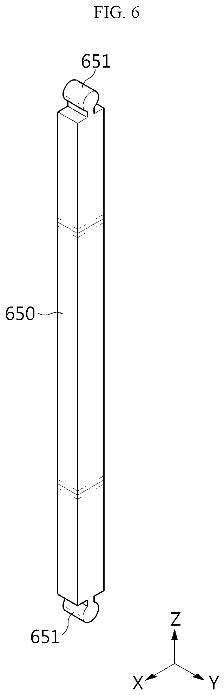

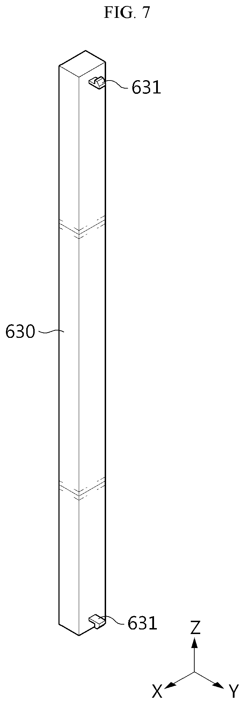

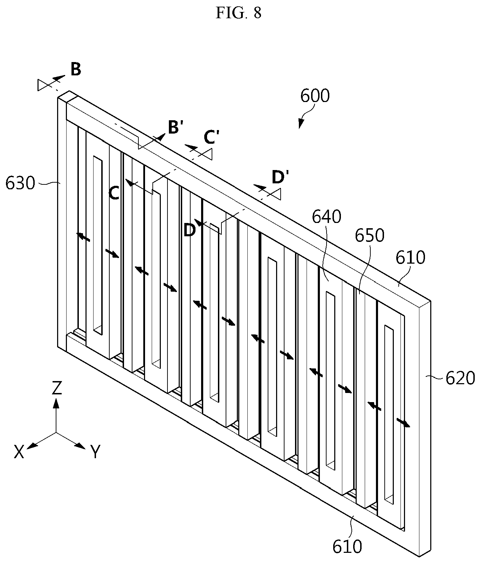

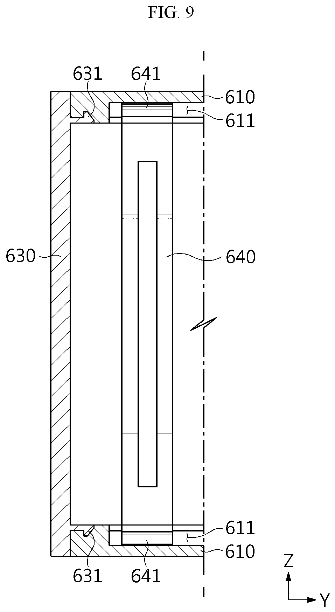

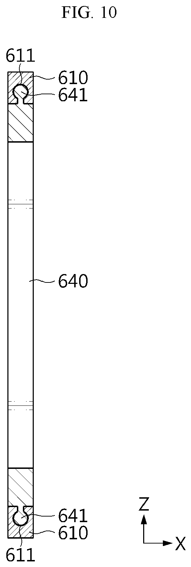

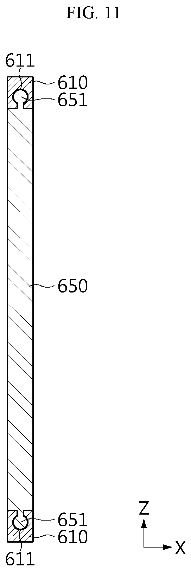

FIG. 3 is a drawing showing a rail 610 of the battery assembly according to an embodiment of the present disclosure. FIG. 4 is a cross-sectional view, taken along the cutting line A-A' of FIG. 3. FIG. 5 is a drawing showing a bus bar 640 of the battery assembly according to an embodiment of the present disclosure. FIG. 6 is a drawing showing a stopper 650 of the battery assembly according to an embodiment of the present disclosure. FIG. 7 is a drawing showing a second vertical portion 630 of the battery assembly according to an embodiment of the present disclosure. FIG. 8 is a drawing showing a rail assembly 600 of the battery assembly according to an embodiment of the present disclosure. FIG. 9 is a drawing showing a cross-sectional configuration along the cutting line B-B' of FIG. 8. FIG. 10 is a cross-sectional view, taken along the cutting line C-C' of FIG. 8. FIG. 11 is a cross-sectional view, taken along the cutting line D-D' of FIG. 8.

Referring to FIGS. 3 to 11, the rail 610 of the battery assembly according to an embodiment of the present disclosure may be provided as a pair. Also, the pair of rails 610 may be arranged in an upper and lower direction. The bus bar 640 may slide along the pair of rails 610. In addition, the bus bar 640 may be located between the pair of rails 610. The pair of rails 610 may guide the upper and lower sides of the bus bar 640.

Also, a first vertical portion 620 may connect, fasten, couple or fix the pair of rails 610. The first vertical portion 620 may extend along the upper and lower direction or the Z-axis direction. The first vertical portion 620 may be coupled, fastened, connected or fixed to the right end of the upper rail 610 and the right end of the lower rail 610. Alternatively, the pair of rails 610 and the first vertical portion 620 may be formed integrally.

According to this configuration of the present disclosure, the bus bar 640 may slide stably.

Referring to FIGS. 3 to 11, the rail 610 of the battery assembly according to an embodiment of the present disclosure may be configured to be electrically insulating. For example, the rail 610 may contain a plastic material.

According to this configuration of the present disclosure, the electrical safety of the battery assembly may be improved.

Referring to FIGS. 3 to 11, at least a portion of the bus bar 640 of the battery assembly according to an embodiment of the present disclosure may be inserted into the rail 610. Each of the pair of rails 610 may have a groove 611. The groove 611 may extend along the longitudinal direction of the rail 610 or the Y-axis direction. The groove 611 may be formed on a lower surface of the upper rail 610. Also, the groove 611 may be formed on an upper surface of the lower rail 610. The groove 611 may have a width that gradually increases toward the inside of the rail 610. The bus bar 640 may include a protrusion 641 protruding from the upper surface. Also, the bus bar 640 may include a protrusion 641 protruding from the lower surface. The protrusion 641 formed on the upper surface of the bus bar 640 may be inserted into the groove 611 of the upper rail 610. The protrusion 641 formed on the lower surface of the bus bar 640 may be inserted into the groove 611 of the lower rail 610. The protrusion 641 of the bus bar 640 may slide along the groove 611. Depending on the shapes of the groove 611 and the protrusion 641, the bus bar 640 inserted into the rail 610 may slide in the Y-axis direction or the left and right direction. Meanwhile, depending on the shapes of the groove 611 and the protrusion 641, the bus bar 640 may be restrained in the X-axis direction and the Z-axis direction.

According to this configuration of the present disclosure, the bus bar 640 may slide stably along the rail 610. Also, since the bus bar 640 is restrained in the X-axis direction and the Z-axis direction, the bus bar 640 may not be separated from the rail 610. As a result, the electrical safety of the battery assembly may be improved.

Referring to FIGS. 3 to 11, the battery assembly according to an embodiment of the present disclosure may further include a stopper 650. The stopper 650 may be installed on the rail 610. The stopper 650 may limit a moving range or sliding range of the bus bar 640.

According to this configuration of the present disclosure, the electrical safety of the battery assembly may be improved. The bus bar 640 may be provided in plurality. If the sliding range or moving range of the bus bar 640 is not limited, an electrical short circuit may occur when the bus bars 640 come into contact with each other. By providing the stopper 650, the contact between the bus bars 640 may be blocked or prevented.

Referring to FIGS. 3 to 11, the stopper 650 of the battery assembly according to an embodiment of the present disclosure may be configured to be electrically insulating. For example, the stopper 650 may contain a plastic material.

According to this configuration of the present disclosure, the electrical safety of the battery assembly may be improved.

Referring to FIGS. 3 to 11, the battery assembly according to an embodiment of the present disclosure may include a plurality of bus bars 640. Also, the battery assembly may include a plurality of stoppers 650. The stoppers 650 may be arranged between the plurality of bus bars 640. Alternatively, the stoppers 650 may be arranged between neighboring bus bars 640.

According to this configuration of the present disclosure, the electrical safety of the battery assembly may be improved. The stopper 650 may block or prevent an electrical short circuit of the plurality of bus bars 640.

Referring to FIGS. 3 to 11, the stopper 650 of the battery assembly according to an embodiment of the present disclosure may be installed on the pair of rails 610. The stopper 650 may extend in the upper and lower direction or the Z-axis direction. The stopper 650 may have a long bar shape. The stopper 650 may have a protrusion 651 protruding on the upper surface. Also, the stopper 650 may have a protrusion 651 protruding on the lower surface. Alternatively, the stopper 650 may have a protrusion 651 on the upper and lower sides, respectively. Both ends of the stopper 650 may be installed on the pair of rails 610, respectively. The protrusion 651 formed on the upper surface of the stopper 650 may be inserted into the groove 611 of the upper rail 610. The protrusion 651 formed on the lower surface of the stopper 650 may be inserted into the groove 611 of the lower rail 610. The protrusion 651 of the stopper 650 may slide along the groove 611. Depending on the shapes of the groove 611 and the protrusion 651, the stopper 650 inserted into the rail 610 may slide in the Y-axis direction or the left and right directions. Meanwhile, depending on the shapes of the groove 611 and the protrusion 651, the stopper 650 may be restrained in the X-axis direction and the Z-axis direction.

According to this configuration of the present disclosure, the stopper 650 may be stably installed on the rail 610. In addition, the stopper 650 may be stably slid along the rail 610. The plurality of stoppers 650 and the plurality of bus bars 640 may be sequentially assembled on the rail 610.

Alternatively, the plurality of stoppers 650 and the plurality of bus bars 640 may be arranged alternately. At this time, the stoppers 650 and the bus bars 640 may be alternately inserted or assembled into the rail 610. As a result, the assemblability of the battery assembly may be improved.

Referring to FIGS. 3 to 11, the battery assembly according to an embodiment of the present disclosure may include a second vertical portion 630. The second vertical portion 630 may connect, fasten, couple, or fix the pair of rails 610. The second vertical portion 630 may extend along the upper and lower direction or the Z-axis direction. The second vertical portion 630 may be coupled, fastened, connected, or fixed to the left end of the upper rail 610 and the left end of the lower rail 610. The second vertical portion 630 may have a hook 631. The hook 631 may be provided on the upper and lower sides of the second vertical portion 630, respectively. The hook 631 may protrude in the right direction or the +Y-axis direction. The hook 631 may be fastened, coupled, or assembled with the pair of rails 610. Alternatively, the second vertical portion 630 and the pair of rails 610 may be coupled by snap-fitting.

According to this configuration of the present disclosure, the assemblability of the battery assembly may be improved.

Referring to FIGS. 3 to 11, the stopper 650 of the battery assembly according to an embodiment of the present disclosure may partition the rail 610 into a plurality of sections. The bus bar 640 may slide between the pair of stoppers 650. Also, the bus bar 640 may slide between the first vertical portion 620 and the stopper 650. Also, the bus bar 640 may slide between the second vertical portion 630 and the stopper 650. The pair of rails 610, the first vertical portion 620, the second vertical portion 630, the plurality of bus bars 640, and the plurality of stoppers 650 may form a rail assembly 600. The pair of rails, the first vertical portion 620, and the second vertical portion 630 may be electrically insulated.

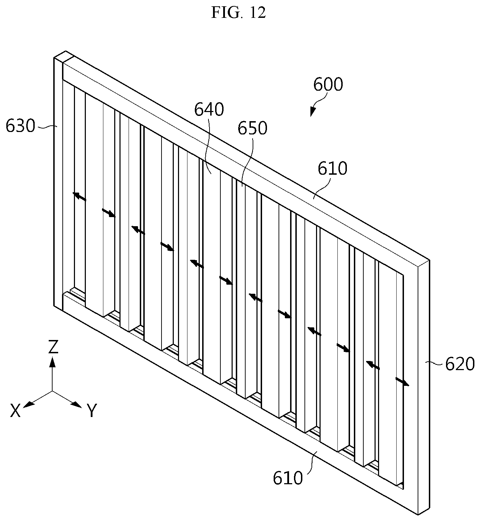

FIG. 12 is a drawing showing a rail assembly 600 of a battery assembly according to another embodiment of the present disclosure. Referring to FIG. 12, the bus bar 640 may have a bar shape. The bus bar 640 may slide between the pair of stoppers 650. Also, the bus bar 640 may slide between the first vertical portion 620 and the stopper 650. Also, the bus bar 640 may slide between the second vertical portion 630 and the stopper 650.

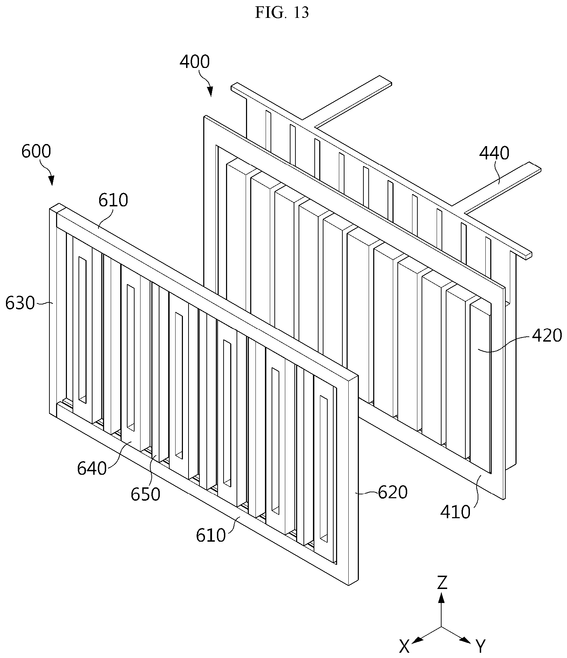

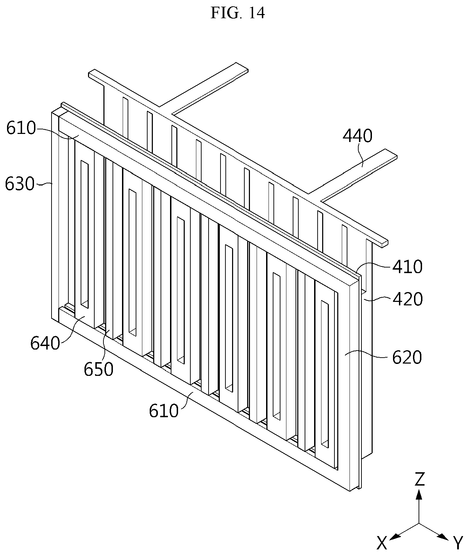

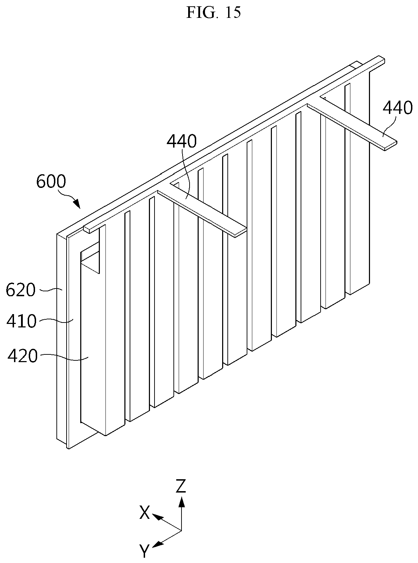

FIG. 13 is a drawing showing a rail assembly 600 and a frame 400 of the battery assembly according to an embodiment of the present disclosure. FIG. 14 is a drawing showing some components of the battery assembly according to an embodiment of the present disclosure. FIG. 15 is a drawing showing some components of the battery assembly of FIG. 14, viewed in a different direction.

Referring to FIGS. 13 to 15, the battery assembly according to an embodiment of the present disclosure may further include a frame 400. The frame 400 may be located at the rear of the rail 610. The frame 400 may include a rail installation portion 410. The rail 610 may be installed, coupled, fixed, or attached to the rail installation portion 410. The rail assembly 600 may be installed, coupled, fixed, or attached to the rail installation portion 410. The frame 400 may be provided in the case 100. The frame 400 may be installed, coupled, fixed, or attached to the case 100. In addition, the frame 400 may be installed, coupled, fixed, or attached to the cover 200. The frame 400 may be electrically insulating.

According to this configuration of the present disclosure, the rail 610 may be stably installed and fixed. In addition, the rail 610 may be stably supported by the frame 400. As a result, the electrical safety of the battery assembly may be improved.

Referring to FIGS. 13 to 15, the frame 400 of the battery assembly according to an embodiment of the present disclosure may include a guide 440. The guide 440 may be positioned at the rear of the rail installation portion 410. In addition, the guide 440 may extend rearward from the frame 400 and may be positioned above the plurality of battery cells 300. The guide 440 may have a bar shape. In addition, the guide 440 may be provided as a pair. The pair of guides 440 may be arranged along the left and right direction or the Y-axis direction. The guide 440 and the rail installation portion 410 may be formed integrally. When assembling the frame 400, the guide 440 may serve as a reference for alignment.

According to this configuration of the present disclosure, the assemblability of the battery assembly may be improved.

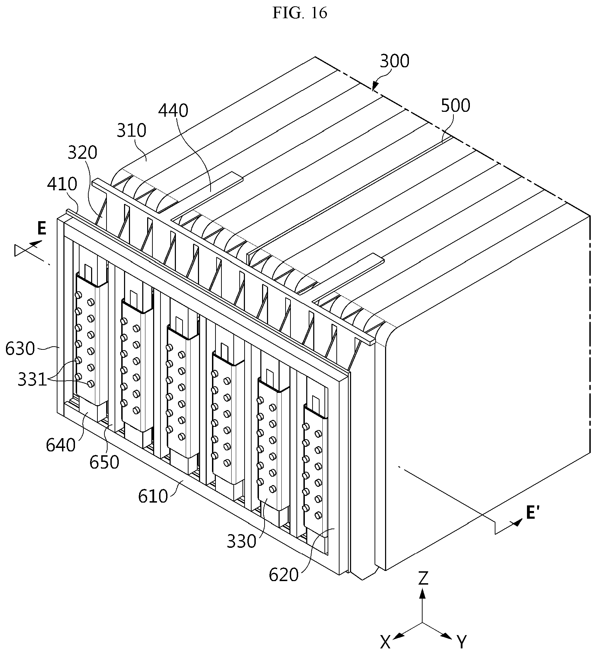

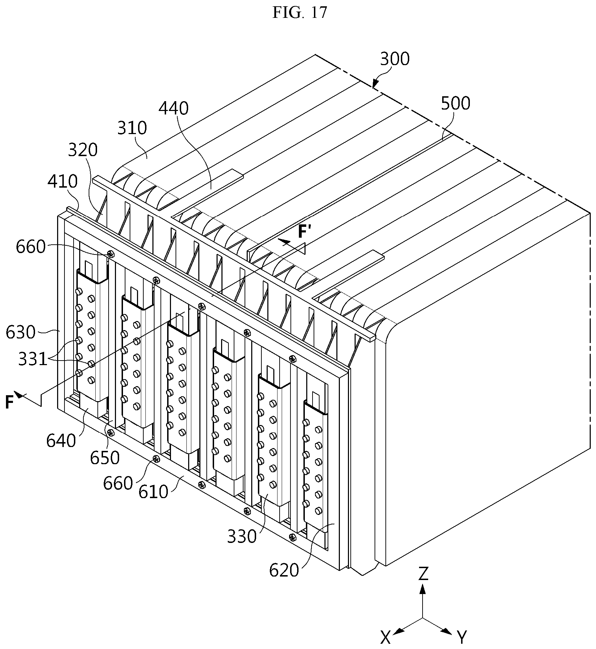

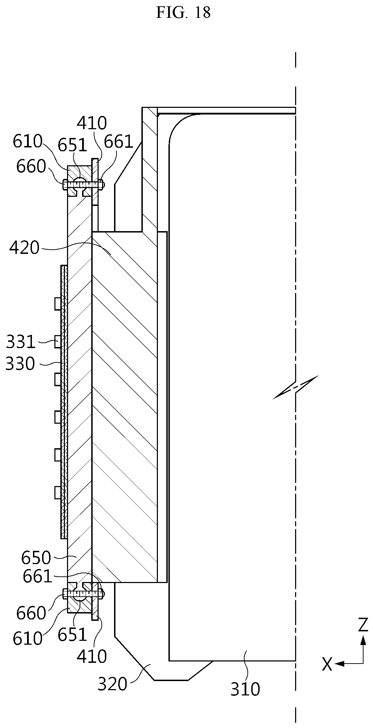

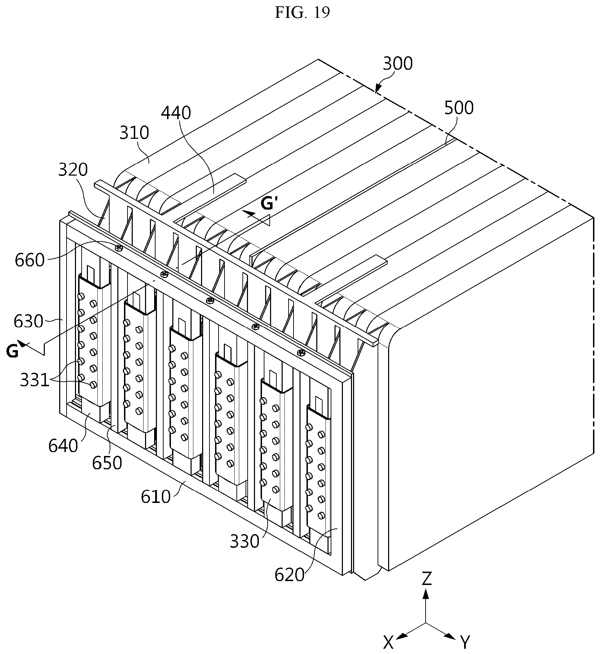

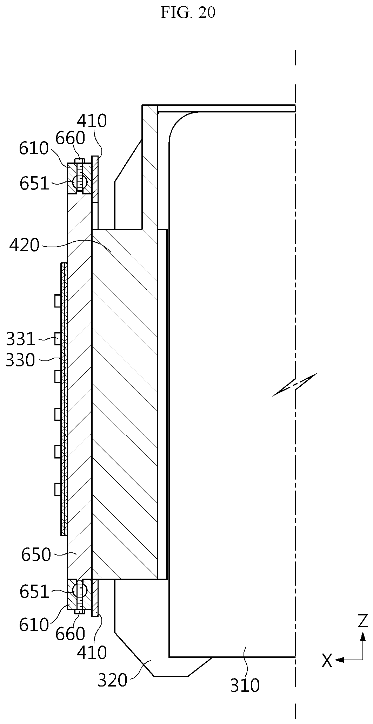

FIG. 16 is a drawing showing some components of the battery assembly according to an embodiment of the present disclosure. FIG. 17 is a drawing showing some components of a battery assembly according to another embodiment of the present disclosure. FIG. 18 is a cross-sectional view, taken along the cutting line F-F' of FIG. 17. FIG. 19 is a drawing showing some components of a battery assembly still according to another embodiment of the present disclosure. FIG. 20 is a cross-sectional view, taken along the cutting line G-G' of FIG. 19.

Referring to FIGS. 16 to 20, the stopper 650 of the battery assembly according to an embodiment of the present disclosure may be fixed to the rail 610. For example, the top and bottom of the stopper 650 may be fixed, respectively.

According to this configuration of the present disclosure, the stopper 650 may reliably limit the sliding range and moving range of the bus bar 640. As a result, the sliding range of each bus bar 640 may be secured, and the electrical safety of the battery assembly may be improved.

Referring to FIGS. 16 to 20, the battery assembly according to an embodiment of the present disclosure may include a fixing member 660 that fixes the stopper 650 to the rail 610. Also, the electrode lead 320 may be coupled, connected, or fixed to the bus bar 640 by welding. The plurality of welding portions 331 may couple, connect, or fix the electrode lead 320 to the bus bar 640.

Referring to FIGS. 17 and 18, the fixing member 660 may extend in the front and rear direction or the X-axis direction. In addition, the fixing member 660 may penetrate the rail 610 and the protrusion 651. Alternatively, the fixing member 660 may penetrate the rail 610, the protrusion 651, and the rail installation portion 410. The fixing member 660 may penetrate the rail 610, the protrusion 651, and the rail installation portion 410 in the front and rear direction or the X-axis direction. At this time, the fixing member 660 may have a thread formed along the longitudinal direction. Also, the fixing member 660 may be fastened with a nut 661. The fixing member 660 may be provided in plurality. The fixing member 660 may penetrate the upper protrusion 651 and the lower protrusion 651 of the stopper 650, respectively. Two fixing members 660 may be provided corresponding to one stopper 650.

Referring to FIGS. 19 and 20, the fixing member 660 may extend in the upper and lower direction or the Z-axis direction. In addition, the fixing member 660 may penetrate the rail 610 and the protrusion 651. The fixing member 660 may penetrate the rail 610 and the protrusion 651 in the upper and lower direction or the Z-axis direction. At this time, the fixing member 660 may have a thread formed along the longitudinal direction. The fixing member 660 may be provided in plurality. The fixing member 660 may penetrate the upper protrusion 651 and the lower protrusion 651 of the stopper 650, respectively. Two fixing members 660 may be provided corresponding to one stopper 650.

According to this configuration of the present disclosure, the assemblability and stability of the stopper 650 may be improved. The stopper 650 may be assembled to the rail 610 by sliding like the bus bar 640. In addition, the stopper 650 or the bus bar 640 may be sequentially slidably connected to the rail 610. Also, the stopper 650 may be aligned and fixed in position by the fixing member 660.

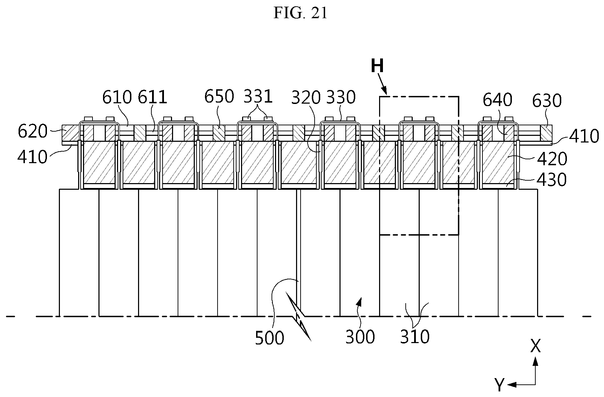

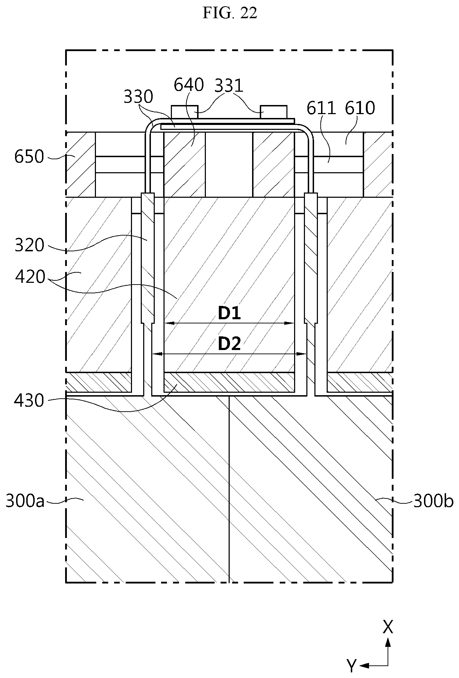

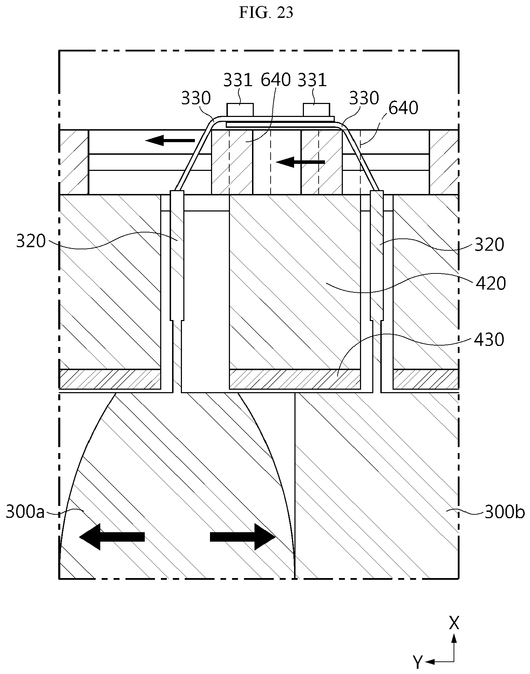

FIG. 21 is a cross-sectional view, taken along the cutting line E-E' of FIG. 16. FIG. 22 is an enlarged view showing a part H of FIG. 21. FIG. 23 is an enlarged view showing the part H of FIG. 21 when swelling occurs.

Referring to FIGS. 21 and 22, each of the plurality of battery cells 300 of the battery assembly according to an embodiment of the present disclosure may include an accommodation portion 310, a sealing portion 320, and an electrode lead 330. The accommodation portion 310 may accommodate an electrode assembly. The sealing portion 320 may extend along a perimeter of the accommodation portion 310. For example, the battery cell 300 having three sides sealed may have the sealing portion 320 formed on three sides along the perimeter of the accommodation portion 310. The sealing portion 320 may also be referred to as a terrace 320. The sealing portion 320 of the battery cell 300 may be formed at the front, top, and rear sides of the accommodation portion 310, respectively. The electrode lead 330 may protrude forward from the sealing portion 320. The electrode lead 330 may be electrically and physically connected to the bus bar 640. The electrode lead 330 and the bus bar 640 may be coupled by welding.

The battery assembly according to an embodiment of the present disclosure may further include a terrace support 420. The terrace support 420 may extend rearward from the frame 400 and support the sealing portion 320. For example, the terrace support 420 may be positioned between a pair of neighboring sealing portions 320. Also, the terrace support 420 may support a front surface of the pair of neighboring battery cells 300a, 300b. Alternatively, the terrace support 420 may contact a front surface of the pair of neighboring battery cells 300a, 300b.

The width (D1) of the terrace support 420 may be smaller than the distance (D2) between the pair of neighboring sealing portions 320.

In addition, the terrace support 420 may have an elastic member 430 on the rear side. The elastic member 430 may have a pad shape. In addition, the elastic member 430 may contain a polyurethane material. Alternatively, the elastic member 430 may contain a silicone material. The elastic member 430 may support the accommodation portion 310 of the battery cell 300.

The battery assembly according to an embodiment of the present disclosure may include an elastic pad 500. The elastic pad 500 may be configured to correspond to an area of the accommodation portion 310. The elastic pad 500 may be positioned or fixed between the accommodation portions 310 of neighboring battery cells 300. The elastic pad 500 may contain a polyurethane material. Alternatively, the elastic pad 500 may contain a silicone material. The elastic pad 500 may be compressively deformed along the left and right direction or the Y-axis direction when the battery cell 300 is inflated due to swelling, thereby minimizing deformation of the battery assembly. In addition, the elastic pad 500 may have high heat resistance and high fire resistance. Accordingly, the elastic pad 500 may function as a barrier that prevents the transmission of venting gas or ignitable particles.

According to this configuration of the present disclosure, damage to the battery cell 300 may be prevented. Referring to FIG. 23, a swelling phenomenon may occur in the first battery cell 300a among the two neighboring battery cells 300a and 300b. At this time, the sealing portion 320 of the first battery cell 300a may move in the +Y-axis direction or to the right. As a result, the sealing portion 320 of the second battery cell 300b may be pulled in the +Y-axis direction or to the right. At this time, the width (D1) of the terrace support 420 is smaller than the distance (D2) between the pair of neighboring sealing portions 320, thereby providing an extra space in which the sealing portion 320 of the second battery cell 300b may be pulled. Also, when the sealing portion 320 of the second battery cell 300b is pulled, the sealing portion 320 may come close to the terrace support 420. The terrace support 420 may stably support the sealing portion 320 to minimize damage to the sealing portion 320.

Referring to FIG. 23, a swelling phenomenon may occur in the first battery cell 300a. At this time, the sealing portion 320 of the first battery cell 300a may move in the +Y-axis direction or to the right. In addition, the bus bar 640 connected to the electrode lead 330 of the first battery cell 300a may slide or move along the rail 610. The bus bar 640 may slide or move in the +Y-axis direction or to the right. As the bus bar 640 moves along the sealing portion 320 of the first battery cell 300a, the tension or stress applied to the sealing portion 320 or the electrode lead 330 of the first battery cell 300a may be reduced. As a result, damage to the first battery cell 300a may be prevented. In addition, disconnection of the electrode lead 330 may be prevented. Also, breakage near the boundary between the electrode lead 330 and the sealing portion 320 may be prevented.

Accordingly, the occurrence of a thermal event from the first battery cell 300a may be suppressed. In addition, the life of the battery assembly may be extended.

The battery assembly of the present disclosure may mean a battery module or a battery pack. When the battery assembly means a battery module, the battery assembly may further include various components, for example components of a battery module known at the time of filing of this application, such as a module case, a cooling unit, and the like.

In addition, when the battery assembly means a battery pack, the battery assembly according to the present disclosure may further include various components, for example components of the battery pack known at the time of filing of this application, such as a BMS, a bus bar, a relay, a current sensor, etc.

A vehicle according to the present disclosure may include the battery assembly according to the present disclosure described above. The battery assembly according to the present disclosure may be applied to vehicles such as electric vehicles or hybrid vehicles. In addition, the vehicle according to the present disclosure may further include various other components included in a vehicle, such as a body, a motor, and a control device like an ECU (electronic control unit), in addition to the battery assembly.

The terms indicating directions such as upper, lower, left, right, front and rear are used for convenience of description, but it is obvious to those skilled in the art that the terms may change depending on the position of the stated element or an observer.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description.

## Claims

1. A battery assembly comprising:
a case providing an inner space;
a plurality of battery cells accommodated in the case and stacked in a left and right direction;
a rail provided in the case and extending in the left and right direction; and
a bus bar configured to slide along the rail and electrically connected to the plurality of battery cells.

2. The battery assembly according to claim 1,
wherein at least a portion of the bus bar is inserted into the rail.

3. The battery assembly according to claim 1,
wherein the rail is provided as a pair, and the pair of rails are arranged in an upper and lower direction.

4. The battery assembly according to claim 1,
wherein the rail is configured to be electrically insulating.

5. The battery assembly according to claim 1, further comprising:
a stopper installed on the rail to limit a moving range of the bus bar.

6. The battery assembly according to claim 5,
wherein the bus bar is provided in plurality, and
wherein the stopper is disposed between the plurality of bus bars.

7. The battery assembly according to claim 5,
wherein the stopper is fixed to the rail.

8. The battery assembly according to claim 5, further comprising:
a fixing member configured to fix the stopper to the rail.

9. The battery assembly according to claim 5,
wherein the stopper is configured to be electrically insulating.

10. The battery assembly according to claim 5,
wherein the rail is provided as a pair, and the pair of rails are arranged in an upper and lower direction, and
wherein the stopper has both ends extending in the upper and lower direction and installed on the pair of rails.

11. The battery assembly according to claim 1, further comprising:
a frame provided in the case and on which the rail is installed.

12. The battery assembly according to claim 11,
wherein each of the plurality of battery cells includes:
an accommodation portion accommodating an electrode assembly;
a sealing portion extending forward from the accommodation portion; and
an electrode lead protruding forward from the sealing portion,
wherein the battery assembly further includes a terrace support that extends rearward from the frame and supports the sealing portion.

13. The battery assembly according to claim 11, further comprising:
a guide extending rearward from the frame and positioned above the plurality of battery cells.

14. A battery pack comprising the battery assembly according to any one of claims 1 to 13.

15. A vehicle comprising the battery assembly according to any one of claims 1 to 13.
